# EUROPÄISCHE PATENTSCHRIFT

(11) **EP 1 099 827 B1**
(45) Veröffentlichungstag und Bekanntmachung des Hinweises auf die Patenterteilung: **09.02.2005**
(21) Anmeldenummer: 00122649.7
(22) Anmeldetag: 18.10.2000
(51) Int. Cl.: F01L 1/02, F16H 7/08, F16H 7/18

(54) **Kettenführung für einen Steuerwellenantrieb einer Brennkraftmaschine sowie Verfahren zur Herstellung einer Kettenführung**
Chain guide for an internal combustion engine camshaft drive and a method for producing a chain guide
Dispositif et procédé de guidage de la chaîne de distribution d'un moteur

(30) Priorität: 12.11.1999 DE 19954481
(43) Veröffentlichungstag der Anmeldung: 16.05.2001
(73) Patentinhaber: Dr.Ing. h.c.F. Porsche Aktiengesellschaft, 70435 Stuttgart (DE)
(72) Erfinder: Schneider, Andreas, 71229 Leonberg (DE); Diehm, Volker, 74193 Schwaigern (DE)

(56) Entgegenhaltungen:
- EP-A- 0 823 543
- DE-C- 19 704 899
- DE-U- 29 700 735
- PATENT ABSTRACTS OF JAPAN vol. 005, no. 199 (M-102), 17. Dezember 1981 (1981-12-17) & JP 56 118508 A (YAMAHA MOTOR CO LTD), 17. September 1981 (1981-09-17)
- PATENT ABSTRACTS OF JAPAN vol. 015, no. 069 (M-1083), 19. Februar 1991 (1991-02-19) & JP 02 296046 A (YAMAHA MOTOR CO LTD), 6. Dezember 1990 (1990-12-06)
- PATENT ABSTRACTS OF JAPAN vol. 009, no. 256 (M-421), 15. Oktober 1985 (1985-10-15) & JP 60 104843 A (KAWASAKI JUKOGYO KK), 10. Juni 1985 (1985-06-10)

## Beschreibung

Die Erfindung geht aus von einer Kettenführung für einen Steuerwellenantrieb einer Brennkraftmaschine sowie von einem Verfahren zur Herstellung einer Kettenführung nach den Merkmalen des Oberbegriffs der beiden Hauptansprüche. Es sind Kettenführungen für Steuerwellenantriebe von Brennkraftmaschinen bekannt (siehe z.B. DE 37 06 136 C1 oder DE-U-29700735), bei denen in der backenförmigen Kettenführung zwei Lageraugen zur Halterung der Kettenführung vorgesehen sind. Die in die Lageraugen eingreifenden Lagerbolzen sind dabei an einem Gehäuseteil der Brennkraftmaschine befestigt und halten die Kettenführung in der gewünschten Position zur Steuerkette. Aufgrund der engen Platzverhältnisse im Steuerkettengehäuse einer Brennkraftmaschine ist die Befestigung derartiger Kettenführungen unter Umständen sehr erschwerlich, da der Zugänglichkeit zu den Befestigungspunkten enge Grenzen gesetzt sind.

Aufgabe der Erfindung ist es daher, eine sichere Befestigung für die Kettenführung im Steuerkettengehäuse vorzusehen, die gleichzeitig eine einfache Montage bzw. Demontage der Kettenführung ermöglicht.

Die Lösung der Aufgabe erfolgt durch die kennzeichnenden Merkmale des Anspruchs 1. Mit Hilfe des am Grundkörper der Kettenführung vorgesehenen Zapfens kann eine einfache und sichere Fixierung der Kettenführung im Steuerkettengehäuse erfolgen, indem der Zapfen der Kettenführung in eine entsprechend der Kontur des Zapfens angepaßte Ausnehmung des Steuerkettengehäuses der Brennkraftmaschine formschlüssig eingreift. Bei der Montage der Kettenführung bzw. des Steuerwellenantriebes kann die Kettenführung auf einfache Art und Weise mit dem mit dem Zapfen versehenen Ende zuerst, von unten, d.h. vom Kurbelraum her, zwischen Steuerkette und Gehäuse eingeführt werden, bis der Zapfen in die Ausnehmung eingreift und mit Hilfe des am anderen Ende der Kettenführung vorgesehenen Lagerauges mit einem Lagerbolzen sicher fixiert wird. Es ist auch möglich, bei noch nicht montiertem Zylinderkopfgehäuse die Kettenführung zuerst an seinem Lagerauge zu befestigen, um danach den Zylinderkopf auf den Zylinder zu setzen, so daß der Zapfen wiederum in die Ausnehmung eingreifen kann.

In den Unteransprüchen sind weitere vorteilhafte Ausgestaltungen und Verbesserungen der erfindungsgemäßen Kettenführung für einen Steuerwellenantrieb einer Brennkraftmaschine enthalten.

Der Zapfen für die Kettenführung läßt sich erfindungsgemäß dadurch herstellen, daß der Mantel des Zapfens zusammen mit dem Gleitbelagkörper für die Steuerkette im Spritzgußverfahren hergestellt wird. Damit kann in einem Arbeitsgang der verschleißfeste Belag auf den Grundkörper aufgebracht werden sowie der verschleißfeste Mantel für den Zapfen hergestellt werden.

Ein Ausführungsbeispiel der Erfindung ist in der Zeichnung dargestellt und wird nachfolgend näher erläutert.

Es zeigen
- Fig. 1: schematisch den Steuerwellenantrieb einer Brennkraftmaschine mit V-förmiger Anordnung der Zylinder,
- Fig.2: eine Seitenansicht einer Kettenführung,
- Fig. 3: eine Draufsicht auf die Kettenführung,
- Fig. 4: einen Schnitt entlang der Linie IV-IV in Fig. 2,
- Fig. 5: einen Schnitt entlang der Linie V-V in Fig. 2 und
- Fig. 6 und 7: eine vergrößerte Darstellung der Schnitte entsprechend Fig. 4 und Fig.5, wobei in Fig. 7 zusätzlich der Schnitt durch eine Lageraufnahme dargestellt ist.

Ein auf einer Kurbelwelle angeordnetes Kettenrad 10 treibt über eine Primärkette 12 ein auf einer Zwischenwelle angeordnetes Dreifachkettenrad 14 an. Über die beiden kleineren Ritzel werden mit Hilfe von zwei Sekundärketten 16 und 18 die im Zylinderkopfgehäuse angeordneten Nockenwellen-Kettenräder 20 und 22 (Zylinder 1) sowie 24 und 26 (Zylinder 2) angetrieben, wobei die Kettenräder 20 und 24 die Nockenwellen für die Auslaßventile und die Kettenräder 22 und 26 die Nockenwellen für die Einlaßventile antreiben. Die Primärkette 12 ist auf ihrem Lostrum mit einer von einem hydraulischen Spanner 28 beaufschlagten Spannschiene 30, die auch eine Kettenführungsfunktion übernimmt, und auf ihrem Lasttrum mit einer Kettenführung, im folgenden als Gleitschiene 32 bezeichnet, versehen.

Die beiden Sekundärketten 16 und 18 sind ebenfalls auf ihrem Lostrum mit von hydraulischen Spannern 34 und 36 beaufschlagten Spannschienen 38 und 40 und auf ihrem Lasttrum mit starr fixierten Gleitschienen 42 und 44 versehen.

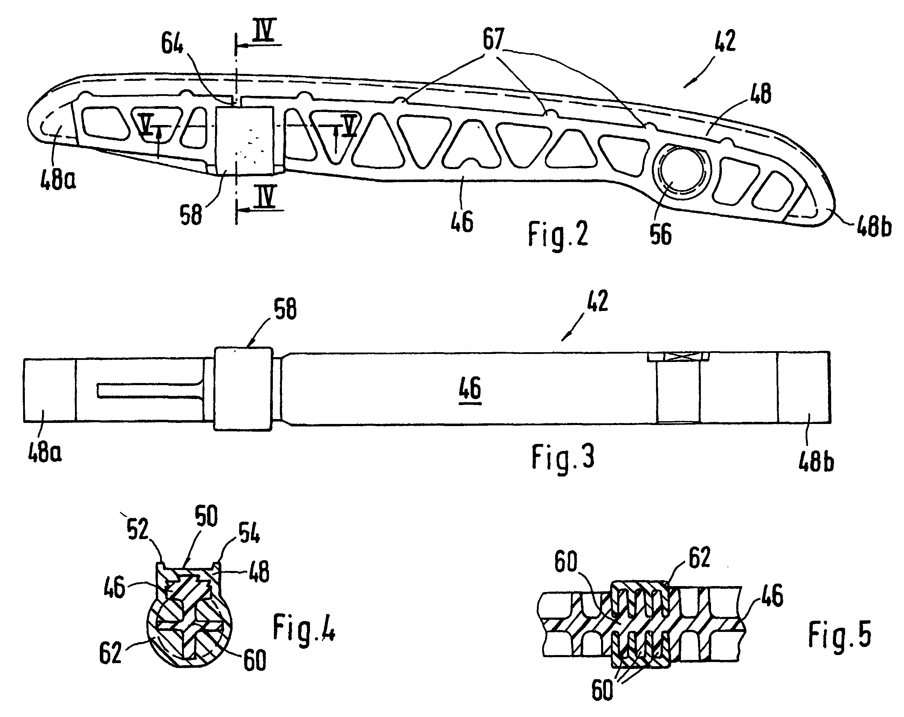

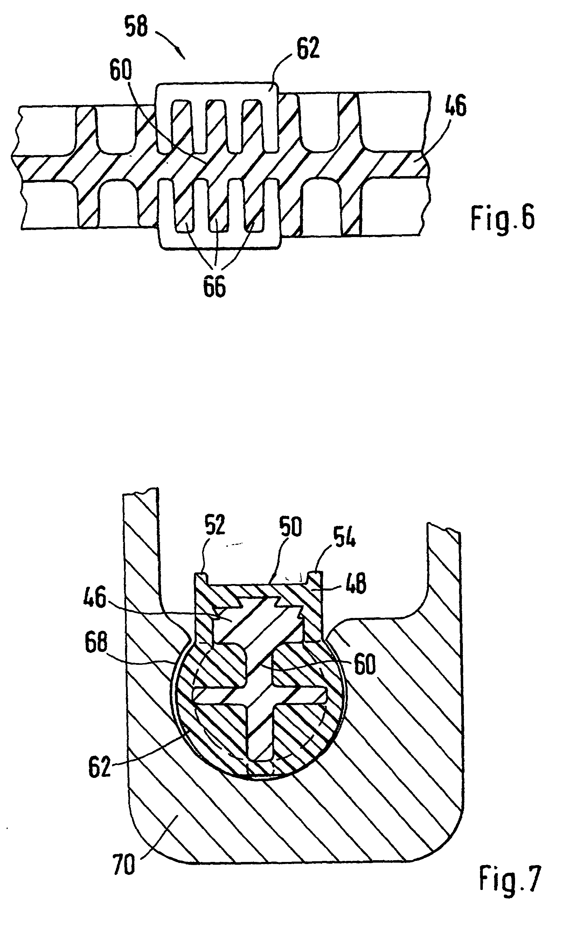

Die in den Figuren 3 bis 7 näher dargestellte Gleitschiene 42 (Gleitschine 44 ist identisch dazu ausgebildet) besteht aus einem Grundkörper 46 und einem Gleitbelagkörper 48, dessen Gleitbahn 50 für die Sekundärkette 16 durch zwei seitlich entlang der Gleitbahn 50 angeordnete Stege 52 und 54 begrenzt wird.

Die backenförmig ausgebildete Gleitschiene 42 weist an ihrem einen Ende ein im Grundkörper 46 angeordnetes Lagerauge 56 und an ihrem anderen Ende einen zylinderförmigen Zapfen 58 auf, die beide, wie im folgenden noch näher erläutert, der Befestigung der Gleitschiene 42 dienen. Der Zapfen 58 besteht aus einem aus dem Grundkörper 46 der Gleitschiene 42 herausgebildeten Kern 60, der von einem Mantel 62 umgeben ist. Der Kern 60 und der Mantel 62 bestehen aus zwei verschiedenen Kunststoffen, wobei der Mantel 62 zusammen mit dem Gleitbelagkörper 48 im Spritzgußverfahren hergestellt wird. Der Kunststoff für den Gleitbelagkörper 48 wird auf den mit einer Schwalbenschwanzführung versehenen Grundkörper 46 aufgebracht. Auf der Höhe des Zapfens 58 sind seitlich im Grundkörper 46 zwei Verbindungsstege 64 angeordnet, von denen in Figur 2 der eine von beiden zu erkennen ist. Beim Aufbringen des Gleitbelagkörpers 48 fließt der Kunststoff über die beiden Stege 64 um den Kern 60 herum und bildet als Mantel 62 den äußeren Abschluß des Zapfens 58. Durch die wabenförmige Struktur des Kerns 60 kann der bei der Herstellung des Zapfens 58 fließfähige Kunststoff zwischen die Stege 66 des Kerns 60 gelangen, so daß ein dauerhaltbarer Mantel 62 bzw. Zapfen entsteht.

An den beiden Randzonen der den Gleitbelagkörper 48 aufnehmenden Oberfläche sind über die gesamte Länge der Gleitschiene 42 im Abstand verteilte halbkreisförmige Erhebungen 67 eingebracht, die den bei der Abkühlung des Kunststoffs für den Gleitbelagkörper 48 auftretenden Längsschwund für die Gleitbahn 50 reduzieren. Daß der Gleitbelagkörper 48 an seinen beiden Stirnseiten 48a und 48b über die Gleitbahn 50 hinaus auf den Grundkörper 46 aufgebracht wird, stellt eine weitere Maßnahme zur Reduzierung des Längsschwunds der Gleitbahn 50 dar.

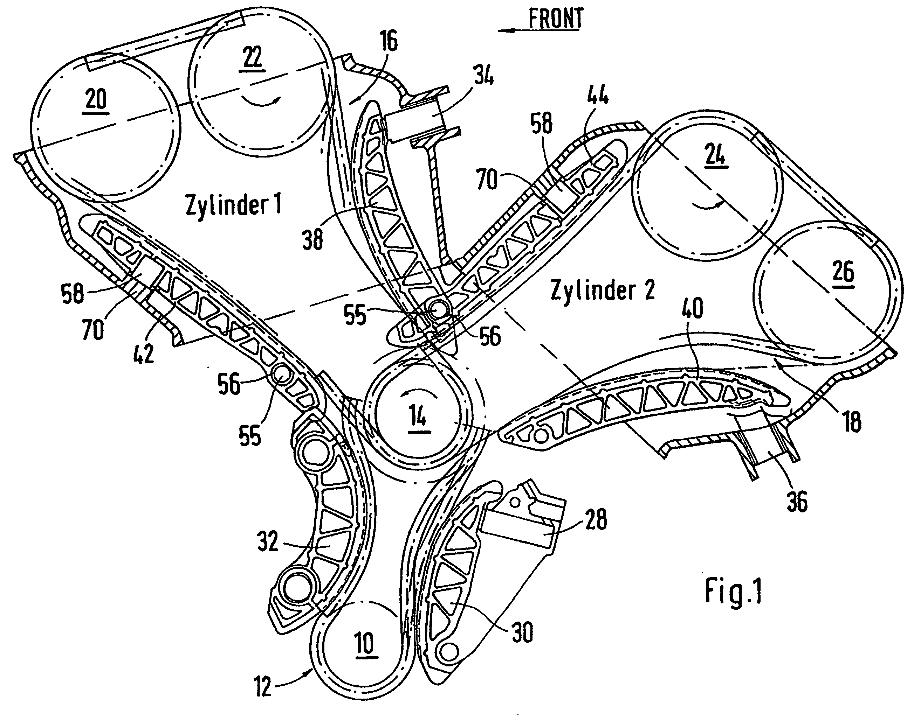

Die beiden, in Figur 1 in ihrer Endlage dargestellten Gleitschienen 42 und 44 greifen mit ihren beiden Zapfen 58 in eine entsprechend der Kontur des Mantels 62 angepaßten Ausnehmung 68 des Steuerkettengehäuses 70 formschlüssig ein, das seitlich am Zylinderkopfgehäuse angeflanscht bzw. einstückig mit diesem verbunden ist. Bei der Montage der Gleitschienen 42 und 44 kann das mit dem Zapfen 58 versehene Ende von unten, d.h. vom Kurbelgehäuse her, zwischen die Sekundärketten 16 und 18 und dem Steuerkettengehäuse 70 entlang geführt werden, bis die Zapfen 58 und die Ausnehmungen 68 in eine Position zueinander gelangen, bei der die an dem anderen Ende der Gleitschienen 42 und 44 angeordneten Lageraugen 56 an den Lagerbolzen 55 befestigt werden können. Es ist auch möglich, die Gleitschienen 42 und 44 bei noch nicht montiertem Zylinderkopfgehäuse zuerst an den Lageraugen 56 zu befestigen, um danach das Zylinderkopfgehäuse auf den Zylinder zu setzen, wobei wiederum die Zapfen 58 in den Ausnehmungen 68 Aufnahme finden.

## Patentansprüche

1. Kettenführung für einen Steuerwellenantrieb einer Brennkraftmaschine mit einem aus einem Grundkörper und einem Gleitbelagkörper bestehenden Backen, wobei am Grundkörper Mittel zur Befestigung der Kettenführung an einem Gehäuseteil der Brennkraftmaschine angeordnet sind, **dadurch gekennzeichnet, daß** der Grundkörper (46) als Befestigungselement einen Zapfen (58) aufweist, der im eingebauten Zustand der Kettenführung (42, 44) in eine Ausnehmung (68) des Gehäuseteils (70) der Brennkraftmaschine formschlüssig eingreift.

2. Kettenführung nach Anspruch 1, **dadurch gekennzeichnet, daß** der Zapfen (58) aus einem aus dem Grundkörper (46) gebildeten Kern (60) und einem Mantel (62) besteht.

3. Kettenführung nach Anspruch 1 oder 2, **dadurch gekennzeichnet, daß** der Kern (60) eine Wabenstruktur aufweist, in die der Mantel des Zapfens (58) gegossen ist.

4. Kettenführung nach einem der vorhergehenden Ansprüche, **dadurch gekennzeichnet, daß** der Gleitbelagkörper (48) und der Mantel (62) des Zapfens (58) aus demselben Material bestehen.

5. Kettenführung nach einem der vorhergehenden Ansprüche, **dadurch gekennzeichnet, daß** der Grundkörper (46) an den Randzonen der den Gleitbelagkörper (48) aufnehmenden Oberfläche auf Höhe des Zapfens (58) mit Verbindungsnuten (64) versehen ist.

6. Kettenführung nach einem der vorhergehenden Ansprüche, **dadurch gekennzeichnet, daß** die Kettenführung als Gleitschiene (42, 44) für die Sekundärkette (16, 18) eines Motors in V-Anordnung vorgesehen ist

7. Verfahren zur Herstellung einer Kettenführung gemäß Anspruch 1, bei dem ein Gleitbelagkörper aus Kunststoff im Spritzgußverfahren auf einen Grundkörper aufgetragen wird, wobei am Grundkörper Mittel zur Befestigung der Kettenführung an einem Gehäuseteil der Brennkraftmaschine angeordnet sind, **dadurch gekennzeichnet, daß** der Mantel (62) eines als Befestigungselement vorgesehenen Zapfens (58) zusammen mit dem Gleitbelagkörper (48) im Spritzgußverfahren hergestellt wird.

## Claims

1. A chain guide for a control-shaft drive of an internal-combustion engine with a jaw comprising a main body and a slideway-lining body, wherein means for fastening the chain guide to a housing part of the internal-combustion engine are arranged on the main body, **characterized in that** the main body (46) has a fastening element in the form of a pin (58) which, in the fitted state of the chain guide (42, 44), engages with positive locking in a recess (68) in the housing part (70) of the internal-combustion engine.

2. A chain guide according to Claim 1, **characterized in that** the pin (58) comprises a core (60), formed from the main body (46), and a jacket (62).

3. A chain guide according to Claim 1 or 2, **characterized in that** the core (60) has a honeycomb structure into which the jacket of the pin (58) is cast.

4. A chain guide according to one of the preceding Claims, **characterized in that** the slideway-lining body (48) and the jacket (62) of the pin (58) consist of the same material.

5. A chain guide according to one of the preceding Claims, **characterized in that** the main body (46) is provided with connecting grooves (64) at the level of the pin (58) in the edge zones of the surface receiving the slideway-lining body (48).

6. A chain guide according to one of the preceding Claims, **characterized in that** the chain guide is provided as a slide rail (42, 44) for the secondary chain (16, 18) of an engine in a V-arrangement.

7. A method of producing a chain guide according to Claim 1, in which a slideway-lining body of plastics material is applied to a main body by injection moulding, wherein means for fastening the chain guide to a housing part of the internal-combustion engine are arranged on the main body, **characterized in that** the jacket (62) of a pin (58) provided as a fastening element is produced together with the slideway-lining body (48) by injection moulding.

## Revendications

1. Guidage de chaîne d'un dispositif d'entraînement de l'arbre de distribution d'un moteur à combustion interne comportant une mâchoire constituée d'un corps de base et d'un corps de garniture de glissement, des moyens de fixation du guidage de chaîne à une partie du carter du moteur à combustion interne étant disposés sur le corps de base, **caractérisé en ce que** le corps de base (46) comporte, comme élément de fixation, un tenon (58) qui, à l'état monté du guidage de chaîne (42, 44), s'engage par complémentarité de formes dans un évidement (68) de la partie (70) du carter du moteur à combustion interne.

2. Guidage de chaîne selon la revendication 1, **caractérisé en ce que** le tenon (58) est constitué d'un noyau (60) formé dans le corps de base (46) et d'une enveloppe (62).

3. Guidage de chaîne selon la revendication 1 ou 2, **caractérisé en ce que** le noyau (60) présente une structure en nid d'abeille dans laquelle est coulée l'enveloppe du tenon (58).

4. Guidage de chaîne selon l'une des revendications précédentes, **caractérisé en ce que** le corps de garniture de glissement (48) et l'enveloppe (62) du tenon (58) sont constitués du même matériau.

5. Guidage de chaîne selon l'une des revendications précédentes, **caractérisé en ce que** le corps de base (46) est pourvu, dans les zones de bordure de la surface recevant le corps de garniture de glissement (48), de rainures de liaison (64) à la hauteur du tenon (58).

6. Guidage de chaîne selon l'une des revendications précédentes, **caractérisé en ce que** le guidage de chaîne est prévu comme rail de glissement (42, 44) pour la chaîne secondaire (16, 18) d'un moteur en V.

7. Procédé de fabrication d'un guidage de chaîne selon la revendication 1, dans lequel un corps de garniture de glissement en matière plastique est appliqué par un procédé de moulage par injection sur un corps de base, des moyens de fixation du guidage de chaîne sur une partie du carter du moteur à combustion interne, étant disposés sur le corps de base, **caractérisé en ce que** l'enveloppe (62) d'un tenon (58), prévu comme élément de fixation, est fabriquée avec le corps de garniture de glissement (48) par le procédé de moulage par injection.
